# EUROPÄISCHE PATENTSCHRIFT

(11) **EP 0 528 757 B1**
(45) Veröffentlichungstag und Bekanntmachung des Hinweises auf die Patenterteilung: **20.09.1995**
(21) Anmeldenummer: 92810573.3
(22) Anmeldetag: 28.07.1992
(51) Int. Cl.: A47J 31/40

(54) **Brüheinrichtung für eine Kaffeemaschine und Verfahren zur Herstellung von Kaffee**
Brewing device for a coffee machine and method for preparing coffee
Dispositif d'infusion pour une machine à café et méthode pour faire du café

(30) Priorität: 30.07.1991 CH 2282/91
(43) Veröffentlichungstag der Anmeldung: 24.02.1993
(73) Patentinhaber: SINTRA HOLDING AG, CH-6210 Sursee (CH)
(72) Erfinder: Lüssi, André, CH-3084 Wabern (CH); Zurbuchen, Hans, CH-3084 Wabern (CH); von Gunten, Jürg, CH-3506 Grosshöchstetten (CH)
(74) Vertreter: Fischer, Franz Josef

(56) Entgegenhaltungen:
- EP-A- 0 237 399
- EP-A- 0 298 547
- CH-A- 641 030
- CH-A- 673 083
- DE-C- 4 002 415
- FR-A- 2 452 905

## Beschreibung

Die Erfindung betrifft eine Brüheinrichtung für eine Kaffeemaschine gemäss dem Oberbegriff des Patentanspruches 1 sowie ein Verfahren zur Herstellung von Kaffee, gemäss dem Oberbegriff des Patentanspruches 8.

Das Zubereiten von Kaffee mit automatischen Kaffeemaschinen wird nach verschiedenen Verfahren ausgeführt, die sich in zwei Grundtypen unterscheiden lassen. Man unterscheidet einen ersten Verfahrenstyp, bei welchem das heisse Wasser einzig und allein infolge der Schwerkraft das in einem Filter befindliche Kaffeepulver durchläuft, von demjenigen Verfahrenstyp, bei welchem das heisse Wasser unter Druck durch das Kaffeepulver gefördert wird (Espresso- oder Druckbrühverfahren). Die vorliegende Erfindung bezieht sich insbesondere auf das zuletzt erwähnte Druckbrühverfahren. Zum automatischen Ausführen dieses Verfahrens sind bereits verschiedene Einrichtungen bekannt. Je nach Anwendungsbereich, beispielsweise für den Haushalt oder den Gaststättenbereich, unterscheiden sich diese bekannten Kaffeemaschinen in ihrem Aufbau, insbesondere im Hinblick auf Robustheit, Flexibilität im Ablauf des Verfahrens, Bedienungs- und Wartungskomfort, etc.

In der CH-Patentschrift 641 030 ist eine automatische Kaffeemaschine beschrieben, welche zur Durchführung von verschiedenen Behandlungsschritten am dem in eine Brühkammer eingebrachten Kaffeepulver zwei unabhängig voneinander angetriebene Kolben aufweist. Infolge dieser unabhängig voneinander angetriebenen Kolben sind zahlreiche Variationen im Verfahrensablauf möglich und auch eine Anpassung des Volumens der Brühkammer an die jeweils verarbeitete Kaffeepulvermenge ist möglich. Der Antrieb der beiden Kolben sowie der Antrieb von weiteren Hilfsmitteln, wie beispielsweise einer Einrichtung zum automatischen Entfernen des ausgelaugten Kaffeepulvers nach dem Brühen, erfolgt durch hydraulische Energie. Zwar ist bei Verwendung von hydraulischen Antriebsmitteln eine relativ freie Wahl der Relativbewegungen der einzelnen Teile zueinander und damit eine relativ freie Wahl des Verfahrensablaufes möglich, doch ist die Ausführung dieser Antriebsmittel relativ aufwendig und teuer. Eine Rentabilität der Kaffeemaschine lässt sich nur bei entsprechend hoher Auslastung erreichen, weshalb derartige Maschinen in der Regel ausschliesslich gewerblichen Anwendungen vorbehalten bleiben.

In der CH-Patentschrift 673 083 ist eine Kaffeezubereitungseinrichtung offenbart, die einen Brühzylinder mit einer zylindrischen Bohrung aufweist sowie zwei Kolben, durch welche die zylindrische Bohrung zum Bilden einer Brühkammer abschliessbar ist, wobei der Brühzylinder und die Kolben relativ zueinander in der Brühzylinderachse verschiebbar sind. Die Brüheinrichtung ist für den horizontalen Betrieb vorgesehen. Der Brühzylinder weist in seiner Mantelfläche eine Oeffnung zum Zuführen des Kaffeepulvers auf. Dieses fällt vorerst einmal auf die innere Mantelfläche des Brühzylinders. Erst durch das Verschieben des letzteren, wobei ein erster der Kolben mitgeschleppt wird, über einen zweiten der Kolben, wird das vorgängig eingefüllte Kaffeepulver in der sich verkleinernden Brühkammer allmählich mehr oder weniger gleichmässig über den ganzen Querschnitt verteilt. Um eine möglichst homogene Kaffeepulverschicht zwischen den beiden Kolben zu erhalten, wird das letztere mit einem bestimmten Druck vorgepresst. Dazu ist der zweite Kolben gegen eine Feder wirkend gegenüber einem festen Maschinengestell verschiebbar angeordnet. Der gewünschte Vorpressdruck ist dann erreicht, wenn der zweite Kolben gegen die Feder einen ganz bestimmten Weg ausgeführt hat. Der Vortrieb des Brühzylinders wird in diesem Moment abgestellt und der Brühvorgang wird eingeleitet. Nach Beendigung desselben wird der Brühzylinder zurückgefahren. Der zweite Kolben gibt das eine Ende des Brühzylinders frei. Je nachdem, wie sich infolge der Reibeinwirkungen der Brühzylinder relativ zum ersten Kolben bewegt, fällt das ausgelaugte Kaffeepulver dann aus dem Brühzylinder heraus, wenn der erste Kolben in den Bereich des durch den zweiten Kolben freigegebenen offenen Brühzylinderendes gelangt ist. Dies geschieht spätestens in der komplett zurückgefahrenen Stellung des Brühzylinders, nachdem vorgängig eine weitere Bewegung des ersten Kolbens durch einen beschlag arretiert worden ist. Dieser Anschlag ist so ausgebildet, dass beim erneuten Vorrücken des Brühzylinders in die Einfüllstellung der erste Kolben solange festgehalten wird, bis er vom vorrückenden Brühzylinder davon abgerissen wird.

Obschon die hier offenbarte Kaffeezubereitungseinrichtung einfach aufgebaut ist, weist sie doch einige Nachteile auf. Durch die horizontale Anordnung muss das Kaffeepulver unter einem bestimmten Vorpressdruck gebrüht werden, damit eine angenähert gleichmässige Verteilung über den Brühkammerquerschnitt gewährleistet und somit ein gleichmässiges Ausbrühen des Kaffeepulvers erreicht wird. Erfahrungen haben jedoch gezeigt, dass die Qualität des Kaffees, der in losem Pulver gebrüht worden ist, besser ist.

Eine ähnliche Brüheinrichtung ist in Dokument EP-A-237 399 offenbart.

Es ist die Aufgabe der vorliegenden Erfindung, eine Brüheinrichtung in einer Kaffeemaschine zu schaffen und ein Verfahren zur Herstellung von Kaffee mit dieser Brüheinrichtung vorzuschlagen, welche den obengenannten Nachteil nicht aufweist. Die zu schaffende Brüheinrichtung für eine Kaffeemaschine soll über eine hohe Flexibilität verfügen, d.h. insbesondere eine Anpassung des Volumens der Brühkammer an die jeweils zu verarbeitende Kaffeepulvermenge erlauben. Sie soll gegenüber dem obgenannten Stand der Technik weiter vereinfacht werden. Das aufgezeigte Verfahren soll ein Losebrühen des Kaffeepulvers auch bei unterschiedlichen zugeführten Kaffeepulvermengen erlauben.

Erfindungsgemäss wird diese Aufgabe durch die in den kennzeichnenden Teilen der Patentansprüche 1 und 8 aufgeführten Merkmale gelöst.

Bevorzugte Weiterausbildungen an der Brüheinrichtung sind in den abhängigen Patentansprüchen 2 bis 7 offenbart. Eine Verfeinerung des vorgeschlagenen Verfahrens kann gemäss den Merkmalen in den abhängigen Patentansprüchen 9 und 10 erfolgen.

Nachstehend wird die Erfindung unter Bezugnahme auf die beigefügten Zeichnungen beispielsweise näher beschrieben. Dabei zeigen
**Fig. 1** einen von der Seite betrachteten teilweisen Längsschnitt durch eine erste Ausführungsform einer erfindungsgemässen Brüheinrichtung, dargestellt in einer ersten Stellung, der Einfüllstellung,
**Fig. 2** eine Frontansicht der in der Fig. 1 gezeigten Brüheinrichtung in der gleichen Stellung,
**Fig. 3** eine Aufsicht auf die in der Fig. 1 gezeigte Brüheinrichtung,
**Fig. 4** einen Längsschnitt durch die Brüheinrichtung gemäss der Fig. 1, dargestellt in einer zweiten Stellung, der Losebrühstellung und gestrichelt in einer dritten Stellung, bei der der Auswurf des ausgelaugten Kaffeesatzes vorbereitet wird,
**Fig. 5** einen Längsschnitt durch die Brüheinrichtung gemäss der Fig. 1 in einer fünften Stellung nach dem Auswurf des ausgelaugten Kaffeepulvers,
**Fig. 6** einen Längsschnitt durch eine erfindungsgemässe Brüheinrichtung in einer weiteren Ausführungsform,
**Fig. 7** einen Längsschnitt durch eine erfindungsgemässe Brüheinrichtung in einer dritten Ausführungsform, und
**Fig. 8** einen Längsschnitt durch eine erfindungsgemässe Brüheinrichtung in einer vierten Ausführungsform.

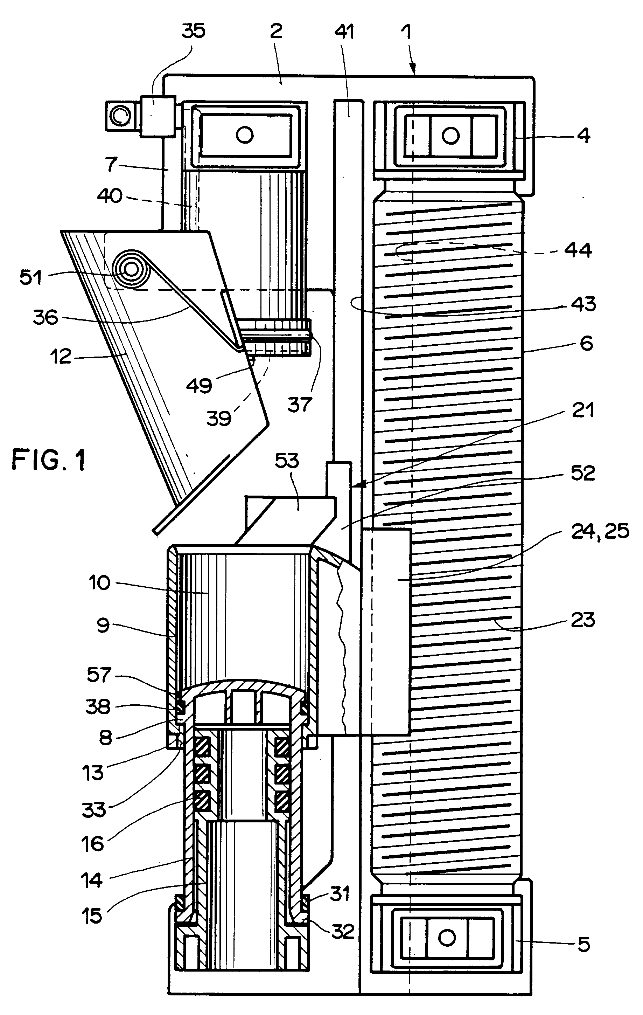

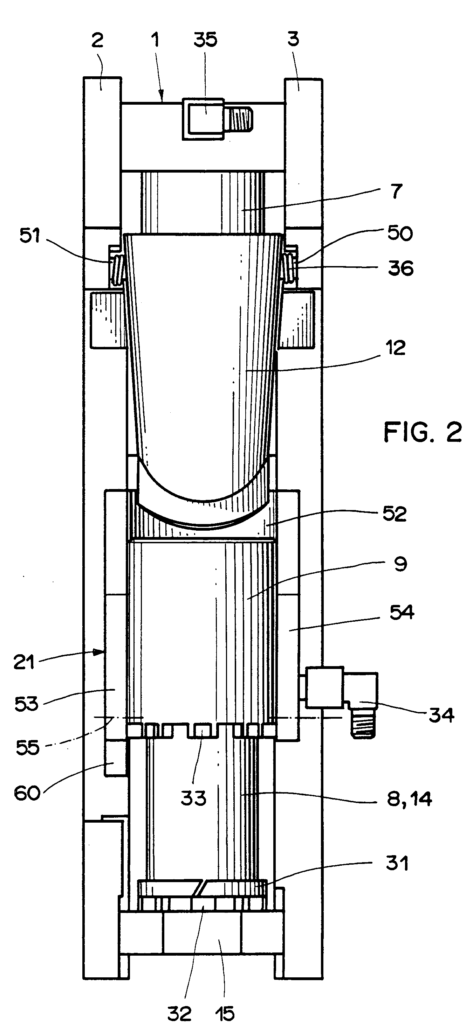

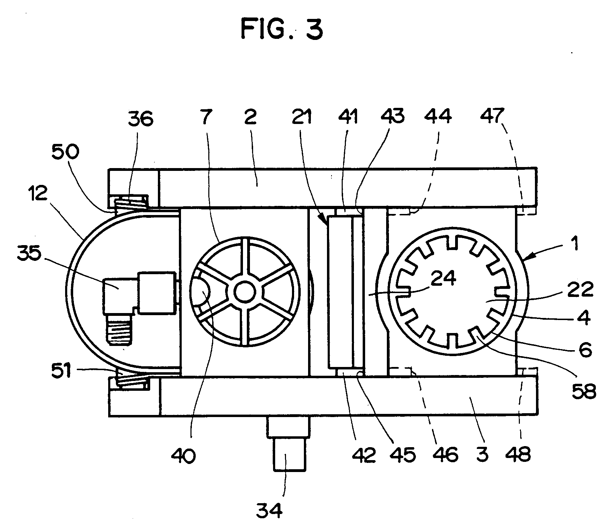

Die Fig. 1, 2 und 3 zeigen eine erste Ausführung der erfindungsgemässen Brüheinrichtung in einem von der Seite betrachteten teilweisen Längsschnitt (Fig. 1), in einer Frontansicht (Fig. 2) und in einer Aufsicht (Fig. 3) in der Ruhe- oder Einfüllstellung. In den Figuren sind die wesentlichen Funktionskomponenten der Brüheinrichtung dargestellt. Die Brüheinrichtung umfasst ein Gestell 1, das im wesentlichen durch eine erste und eine zweite Seitenwange 2, 3 gebildet ist, welche Seitenwangen durch entsprechende Distanzhaltemittel voneinander beabstandet sind. Als Distanzhaltemittel dienen unter anderem ein oberes und ein unteres Spindellager 4, 5 einer sich längs über die ganze Einrichtung erstreckenden Antriebsspindel 6. Die letztere ist in den Spindellagern drehbar gelagert und gegen ein axiales Verschieben gesichert. Auf der Antriebsspindel 6 ist ein Führungsmittel 23, vorzugsweise als mehrgängiges Spindelgewinde mit einer Steigung von etwa 5° angeordnet. Das Spindelgewinde erstreckt sich über die ganze Länge der Antriebsspindel 6, dessen Arbeitslage vertikal ist. Beabstandet zur Antriebsspindel 6 ist ein Brühzylinder 9 längs zur ersteren verschiebbar gehalten. Der Brühzylinder 9 besitzt eine Durchgangsbohrung 10, deren Achse parallel zur Achse der Antriebsspindel 6 verläuft. Mit dem Brühzylinder fest verbunden ist ein Mitnahmeorgan 24, das sich zur Antriebsspindel 6 hin erstreckt. Das Mitnahmeorgan 24 ist im wesentlichen plattenförmig ausgeführt, wobei die der Antriebsspindel 6 zugewandte Seite ein weiteres Führungsmittel 25 umfasst, das mit dem Führungsmittel 23 in Eingriff steht. Die seitlichen Bereiche des Mitnahmeorganes 24 sind je zwischen zwei Führungsflächen 43, 44; 45, 46 geführt, die durch entsprechende Längsführungen 41, 47 an der ersten Seitenwange 2 und 42, 48 an der zweiten Seitenwange 3 ausgebildet sind. Durch das Drehen der Antriebsspindel 6 in der einen oder anderen Richtung wird der Brühzylinder nach oben oder nach unten verschoben.

Fest mit dem Gestell verbunden ist ein oberer Kolben 7. Seine dem Brühzylinder 9 zugewandte Stirnseite ist mit einem demontierbaren Sieb 39 versehen, welches mittels einem Befestigungschip 49 gehalten ist. Die Mantelfläche des oberen Kolbens, nahe dem Sieb 39, wird von einem Dichtring 37 umfasst. Dieser ist dazu bestimmt, den Kolben gegenüber der Innenwandung der Bohrung 10 des Brühzylinders 9 flüssigkeitsdicht abzudichten. Der obere Kolben 7 umfasst einen langen, hohlzylinderförmigen Schaft, dessen dem Sieb 39 abgewandtes Ende gegen die beiden Seitenwangen 2, 3 hin erweitert ist, wodurch der obere Kolben 7 ebenfalls als Distanzhaltemittel für die Seitenwangen 2, 3 einsetzbar ist. Von einem am zuletzt genannten Ende des Kolbens 7 angeordneten Anschlussnippel 35 führt eine Flüssigkeitsleitung 40 innerhalb des hohlzylinderförmigen Schaftes des oberen Kolbens 7 bis hinter das Sieb 39. Der Anschlussnippel 35 kann entweder zum Zuführen von Wasser oder zum Abführen von Kaffee dienen.

Die Bohrung 10 des Brühzylinders 9 weist auf der dem oberen Kolben 7 abgewandten Seite nach innen gerichtete Nocken 33 auf, die regelmässig um den Umfang der Bohrung 10 verteilt sind. Jeder der Nocken 33 bildet eine sich rechtwinklig zur Achse der Bohrung 10 erstreckende Anschlagskante 13. An diesen liegt gemäss der hier beschriebenen Figur ein unterer Kolben 8 auf, der in der Bohrung 10 des Brühzylinders 9 angeordnet ist und im wesentlichen längs des ganzen Brühzylinders frei verschiebbar ist. Der untere Kolben 8 weist ebenfalls einen hohlzylinderförmigen Schaft 14 auf, der sich vom Brühzylinder 9 weg nach unten erstreckt. Am unteren Ende des Schaftes 14 sind nach auswärts gerichtete Nocken 32 über den Umfang verteilt angeordnet. Diese Nocken sind zum Tragen eines geteilten, über den Schaft 14 spreizbaren Anschlagringes 31 bestimmt. Dieser dient dazu, zu verhindern, dass der untere Kolben 8 den Brühzylinder 9 nach oben verlassen kann. Die nach aussen gerichteten Nocken 32 am Schaft 14 sind derart angeordnet, dass sie zum Einführen des unteren Kolbens 8 in den Brühzylinder 9 je nach Drehstellung des ersteren zwischen den zum Zentrum gerichteten Nocken 33 der Bohrung 10 des Brühzylinders 9 hindurchgeführt werden können. Der untere Kolben 8 besitzt im Bereiche seiner im Brühzylinder 9 befindlichen Stirnfläche ebenfalls einen Dichtring 38 mit einer gleichen, bereits vorgenannten Bestimmung. Koaxial zur Bohrung 10 bzw. zum unteren Kolben 8 ist ein hohlzylinderförmiger Stutzen 15 vorhanden. Sein dem Brühzylinder 9 abgewandtes Ende ist seitlich erweitert und dient ebenfalls als Distanzhaltemittel für die bereits genannten Seitenwangen 2, 3.

Der hohlzylinderförmige Schaft 14 des unteren Kolbens 8 ist über den Stutzen 15 schiebbar. Ein Hemmittel 16, im gezeigten Beispiel bestehend aus drei O-Ringen 16, die den Stutzen 15 in entsprechenden Nuten positioniert umfassen, sorgt dafür, dass die Verschiebebewegung des unteren Kolbens 8 relativ zum Stutzen 15 gehemmt oder gebremst ist.

Im oberen Endbereich zwischen den beiden Seitenwangen 2, 3 ist ein Trichter 12, zum Einfüllen von Kaffeepulver in den Brühzylinder 9, schwenkbar gelagert. Jede der Seitenwangen 2, 3 weist dazu je einen nach innen sich erstreckenden Lagerzapfen 50, 51 auf. Mindestens eine Feder 36 ist dafür besorgt, dass der Trichter 12 in der Ruhe- oder Einfüllstellung eine zur Bohrung 10 hin gerichtete verschwenkte Stellung einnimmt.

Am Brühzylinder 9 ist im weiteren eine Abstreifvorrichtung 21 angeordnet. Diese ist in den Fig. 1 bis 3 relativ schwer erkennbar. Am unteren Ende des Brühzylinders 9 vorgesehene und gegen die Seitenwangen 2, 3 hin gerichtete Zapfen sind dazu bestimmt, je einen schwenkbar daran gelagerten Hebel 53, 54 der Abstreifvorrichtung 21 zu tragen. Die Hebel 53, 54 erstrecken sich zum oberen Ende der Brühkammer 9 hin und sind dort fest mit einer Ausstossplatte 52 verbunden, die sich im wesentlichen rechtwinklig zur Brühzylinderachse über den Brühzylinder hinweg ausbreitet. Im weiteren ist im unteren Endbereich des Brühzylinders ein weiterer Anschlussnippel 34 angeordnet, durch welchen entweder Wasser an den Brühzylinder 9 zugeführt oder Kaffee daraus abgeführt werden kann. Der Brühzylinder 9 weist beim Anschlussnippel 34 in seiner Wand eine rechtwinklig zur Bohrung 10 sich erstreckende Durchgangsbohrung auf. Diese ist in den Figuren nicht sichtbar. Sie ist jedoch so angeordnet, dass sie in der gezeigten Einfüllstellung knapp oberhalb des Dichtringes 38 des unteren Koblens 8 in einen zwischen der Bohrung 10 und der Mantelfläche des unteren Kolbens 8 gebildeten Ringspalt 57 mündet.

Die Antriebsspindel 6 ist ebenfalls hohlzylinderförmig ausgeführt. Sie weist an ihrem einen Endbereich nach innen gerichtete Nocken 58 auf, die zum Eingreifen in entsprechend geformte Rillen einer koaxial zur Spindel geführten Antriebswelle 22 bestimmt sind. Die Antriebswelle 22 ist, in den Figuren nicht sichtbar, vorzugsweise über ein Winkelgetriebe mit einem Antriebsmotor verbunden.

Nachdem nun die wesentlichsten Komponenten der Brüheinrichtung beschrieben worden sind, soll nun im folgenden die Funktionsweise erklärt werden.

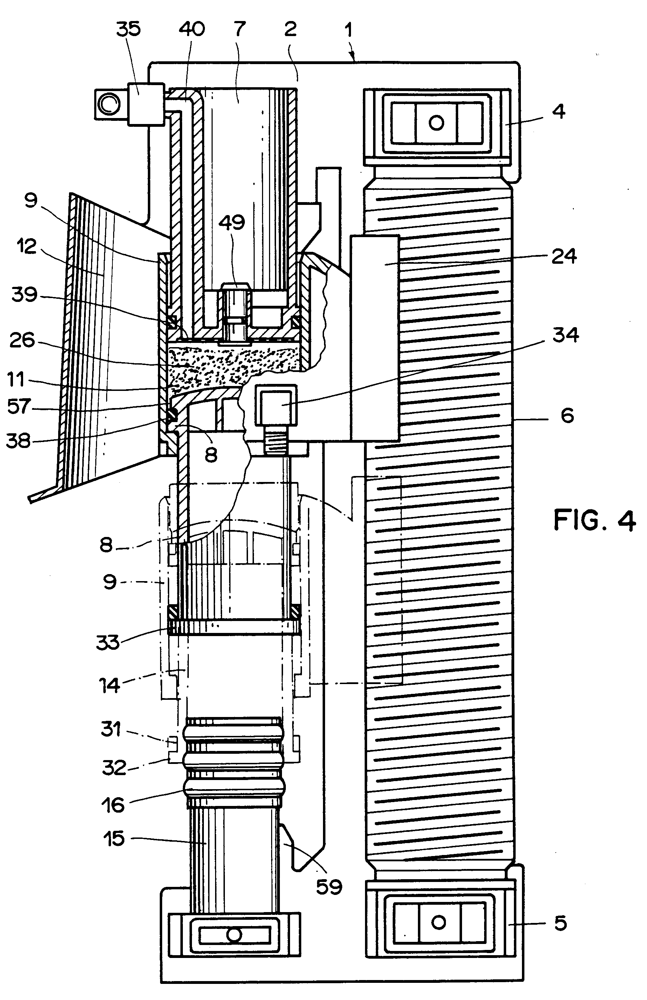

Es wird dabei von der in der Fig. 1 gezeigten Einfüllstellung ausgegangen. Eine gewisse Menge Kaffeepulver gelangt durch den eingeschwenkten Trichter 12 in die Bohrung 10 des Brühzylinders 9. Das Kaffeepulver verteilt sich dabei gleichmässig über die Stirnfläche des unteren Kolbens 8. Die Antriebsspindel 6 wird in Drehung versetzt, derart, dass sich der Brühzylinder 9 nach oben bewegt. Der untere Kolben 8, der auf den Anschlägen 13 aufliegt, wird mitgezogen. Der Schaft 14 des unteren Kolbens 8 verschiebt sich dabei relativ zum feststehenden Stutzen 15. Der hochfahrende Brühzylinder 9 läuft auf die abgeschrägte Unterseite des Trichters 12 auf und schwenkt diesen dabei nach aussen in eine Stellung, die in der Fig. 4 gezeigt ist.

Beim fortgeführten Hochfahren des Brühzylinders 9 wird dessen oberes Ende über den oberen Kolben 7 hinwegbewegt. Dadurch wird die Bohrung 10 des Brühzylinders beidseitig verschlossen und eine Brühkammer 11 wird gebildet. Die Aufwärtsbewegung des Brühzylinders erfolgt zeitgesteuert, jedoch mindestens so lange, bis durch das stark gepresste Kaffeepulver zwischen dem unverschiebbar angeordneten oberen Kolben 7 und dem unteren Kolben 8 eine gleich grosse, dem Antrieb entgegengesetzte Kraft gebildet worden ist. Auf diese Weise kann die Menge des eingefüllten Kaffeepulvers präzise bestimmt werden. Nach Ablauf der Zeitsteuerung wird die Antriebsspindel kurzzeitig in umgekehrter Richtung angetrieben und die Brühkammer 11 wieder ein wenig geöffnet. Dies ist die sogenannte Brühstellung. Sie ist in der Fig. 4 dargestellt. Die Oeffnung der Brühkammer, die soeben stattgefunden hat, ist für jede der eingefüllten Kaffeepulvermengen 26 genau gleich gross. Durch diese Oeffnung wird ermöglicht, dass das Kaffeepulver lose gebrüht werden kann. Dies geschieht, indem durch einen der beiden Anschlussnippel 34, 35 heisses Wasser an die Brühkammer 11 zugeführt wird. Vorzugsweise geschieht dies beim ersten Nippel 34, der am Brühzylinder 9 angeordnet ist. Das Wasser tritt durch den Ringspalt 57 in die Brühkammer 11 ein, durchspült das Kaffeepulver 26 gleichmässig und verlässt über das Sieb 39 die Leitung 40 und den anderen Anschlussnippel 35 die Brüheinrichtung als Kaffee. Anschliessend an den Brühvorgang wird die Brühkammer 11 durch Hochschrauben des Brühzylinders 9 erneut verkleinert, um noch darin befindliche Flüssigkeit auszupressen. Nach dem Pressvorgang wird der Brühzylinder 9 durch entsprechende Drehung der Antriebsspindel 6 nach unten bewegt. Der untere Kolben 8 verbleibt infolge der Reibung des Gleitringes 38 und der Haftung des nun zu einem Kuchen gepressten, ausgelaugten Kaffeepulvers 26 vorerst in seiner untern Stellung. Das untere Ende des Schaftes 14 des unteren Kolbens 8 läuft im Verlaufe der Abwärtsbewegung des Brühzylinders 9 auf das obere Ende des Stutzens 15 auf. Infolge der Hemmittel, beispielsweise der O-Ringe 16, verlangsamt sich nun die Abwärtsbewegung des unteren Kolbens 8 inbezug auf die Abwärtsbewegung des Brühzylinders 9. Dadurch verschiebt sich innerhalb der Bohrung 10 der untere Koblen 8 relativ zum Brühzylinder 9 langsam gegen dessen oberes Ende. Der Kaffeepulverkuchen wird allmählich aus dem Brühzylinder ausgestossen und verbleibt auf dem unteren Kolben 8 aufliegend. Eine solche soeben beschriebene Stellung des Brühzylinders 9 ist in der Fig. 4 strichpunktiert gezeichnet. Sobald die Nocken 33 des Brühzylinders 9 mit dem Anschlagsring 31 in Kontakt kommen, wird der untere Kolben 8 wieder mit gleicher Geschwindigkeit wie der Brühzylinder 9 nach unten bewegt. Spätestens zu diesem Zeitpunkt ist der Kaffeepulverkuchen vollständig aus dem Brühzylinder ausgestossen.

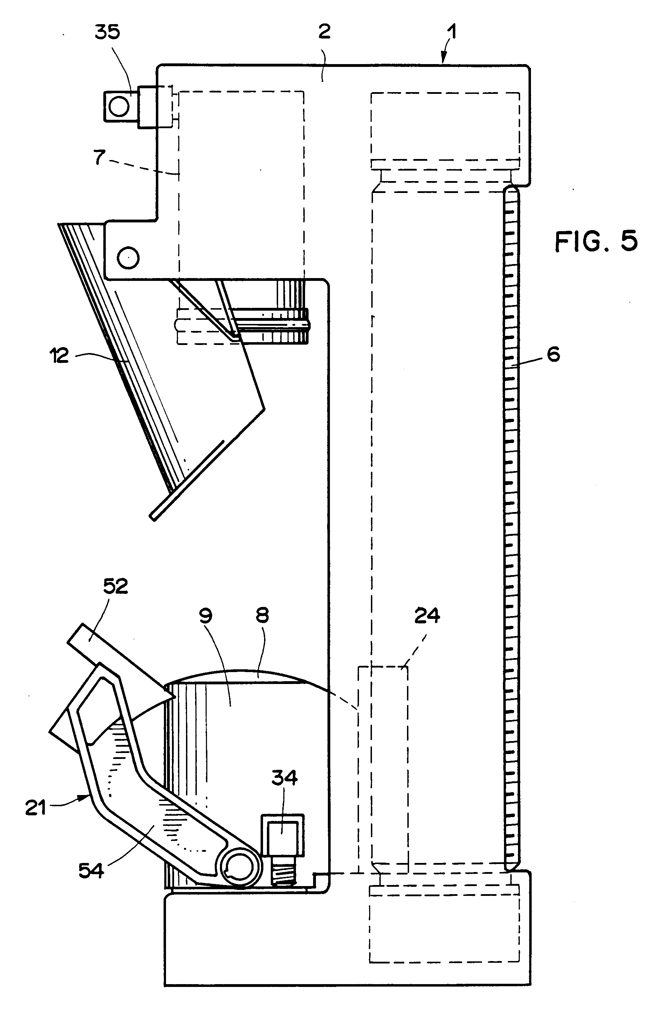

Die Abwärtsbewegung des Brühzylinders 9 wird solange fortgesetzt, bis die Nocken 32 des Schaftes 14 an der als Distanzmittel dienenden Erweiterung des unteren Endes des Stutzens 15 zum Anliegen kommen. Kurz zuvor ist ein Auslenkhebel 60 (Fig. 2) der Abstreifvorrichtung 12 auf eine Betätigungsnase 59 aufgelaufen, wodurch eine Schwenkbewegung der Ausstossplatte 52 über die bombierte Stirnfläche des unteren Kolbens 8 stattgefunden hat. Der Kuchen aus ausgelaugtem gepresstem Kaffeepulver ist dadurch aus der Brüheinrichtung entfernt worden. Diese Stellung ist in der Fig. 5 dargestellt. Kaum erwähnt zu werden braucht, dass beim Abwärtsbewegen der Brüheinrichtung 9 durch die Kraft der Feder 36 automatisch ein Einwärtsschwenken des Trichters stattgefunden hat.

Der Brühzylinder 9 wird nun wieder nach aufwärts in die Einfüllstellung bewegt. Durch den Auslenkhebel 60 (Fig. 2) und durch die eine Längsführung 41 an der Seitenwange 2 wird beim Beginn dieser Aufwärtsbewegung die Abstreifvorrichtung 12 wieder eingeschwenkt. Die Längsführung 41 und der Auslenkheben 60 liegen derart zueinander, dass ein Ausschwenken der Abstreifvorrichtung nun nicht mehr möglich ist. Durch die Hemmittel 16 (O-Ringe) ist die Aufwärtsbewegung des unteren Kolbens 8 vorübergehend gehemmt. D.h., sie ist langsamer als die Aufwärtsbewegung des Brühzylinders 9 ist. Dadurch verschiebt sich der untere Kolben 8 relativ zum Brühzylinder 9 gegen die Anschlagskanten 13 hin. Erst wenn der untere Kolben 8 darauf zum Anliegen kommt, wird seine Aufwärtsbewegung mit der Geschwindigkeit des Brühzylinders 9 fortgesetzt, um schlussendlich wieder in die Einfüllstellung zu gelangen.

Alle die Zeiten, während denen die Antriebsspindel 6 in der einen oder in der anderen Richtung in Betrieb gesetzt ist, sind zeitgesteuert. Dadurch kann, indem entsprechende Endschalter weggelassen werden können, die Brüheinrichtung gegenüber bekannten Ausführungen einfacher gebaut werden. Eine Vorrichtung zum Feststellen einer bestimmten Vorpressung des Kaffeepulvers ist ebenfalls nicht notwendig. Der obere Kolben kann dadurch fest mit den Seitenwangen 2, 3 verbunden werden. Alle bewegbaren Teile der Brüheinrichtung werden von einem einzigen Motor angetrieben.

Alle Teile der Brüheinrichtung sind vorzugsweise aus einem thermoplastischen Kunststoff gespritzt. Beim Betrachten der Figuren fällt auf, aus wie wenigen Einzelteilen die erfindungsgemässe Brüheinrichtung aufgebaut ist. Die Anzahl der Verschleissteile ist minimal. Dies wirkt sich äusserst positiv auf die Betriebsdauer der Einrichtung bis zum Auftreten eines Störungsfalles aus. Durch die besondere Zufuhr des Wassers über den Ringspalt 57 beim unteren Kolben 8 kann ein relativ teures Sieb eingespart werden. Durch das einströmende Wasser wird der Ringspalt 57 bei jedem Brühvorgang automatisch gereinigt. Die Steigung des Spindelgewindes 23 an der Antriebsspindel 6 ist so gewählt, dass bei abgeschaltetem Antriebsmotor und bei einem hohen Brühdruck von ungefähr 10 bar in der Brühkammer 11 während des Brühvorganges infolge der Gewindereibung keine Abwärtsbewegung des Brühzylinders 0 erfolgen kann. Die Antriebsvorrichtung ist selbsthemmend ausgeführt.

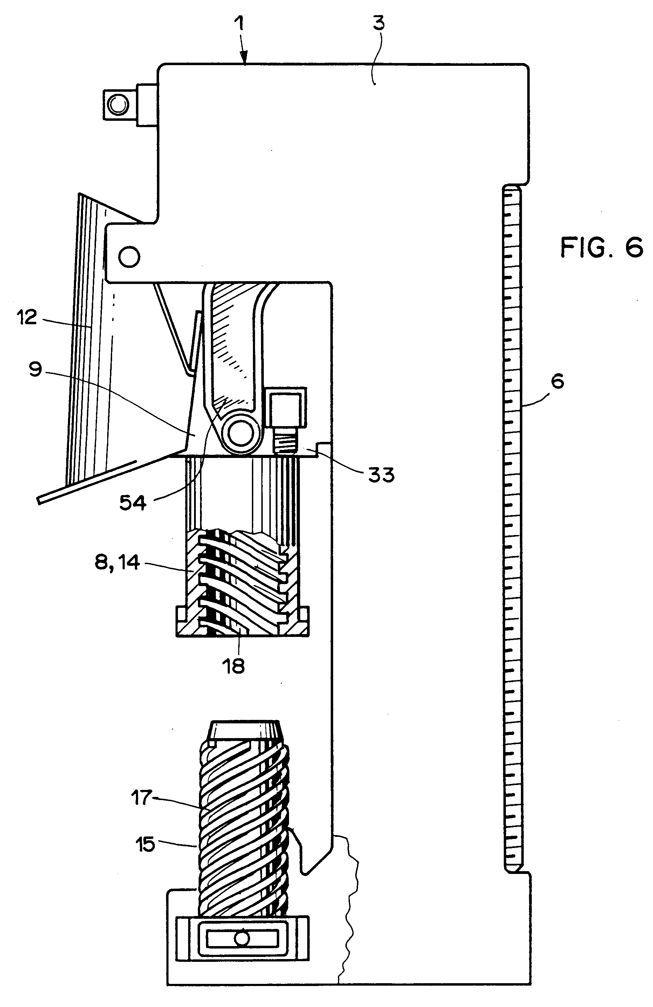

In den Fig. 6, 7 und 8 sind weitere Ausführungsbeispiele der erfindungsgemässen Brüheinrichtung bezüglich der Hemmittel 17, 18, 19, 20 dargestellt. Dies sind die einzigen Unterschiede der weiteren gezeigten Brüheinrichtungen zur vorgängig beschriebenen. Es ist deshalb absichtlich darauf verzichtet worden, bereits erklärte Teile erneut zu bezeichnen.

Bei der in der Fig. 6 wiedergegebenen zweiten Ausführungsform einer Brüheinrichtung ist am Stutzen 15 ein nicht steilgängiges mehrgängiges Aussengewinde angeordnet. Ein entsprechendes Innengewinde ist innerhalb des Schaftes 14 vom unteren Kolben 8 vorhanden. Indem die Gewindegangenden sowohl beim Aussengewinde als auch beim Innengewinde nicht schräg bezüglich der Längsachse des Stutzens 15 bzw. des Schaftes 14 auslaufen, sondern parallel zu dieser Achse, erfolgt in jedem Falle beim Auftreffendes Schaftes 14 auf den Stutzen 15 anlässlich einer Abwärtsbewegung des Brühzylinders 9 eine Selbstzentrierung der Gewinde. Die Ganghöhe der Gewinde 17, 18 ist so gewählt, dass infolge der Gewindereibung die Bewegung des untern Kolbens 18 vorübergehend gehemmt wird, bis dieser durch den Brühzylinder, je nachdem auf welcher Seite des Schaftes die Nocken 33 zur Anlage kommen, wieder mit der gleichen Geschwindigkeit wie der Brühzylinder weiterbewegt wird. Unter Hemmung kann dabei sowohl eine vorübergehende Verlangsamung der Bewegung als auch ein vorübergehender Stillstand oder eine Kombination davon verstanden werden.

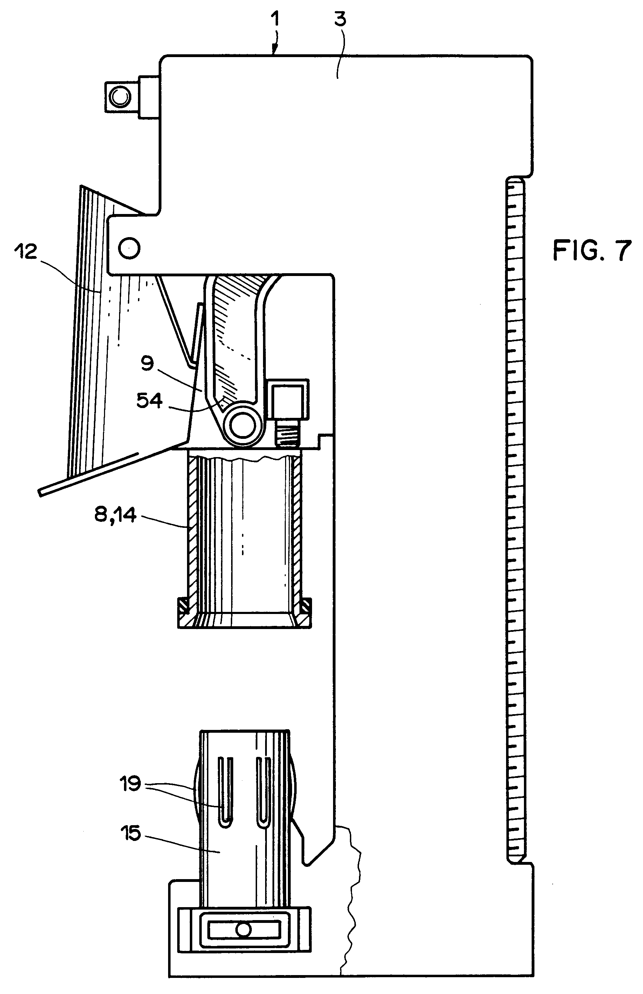

Eine dritte Brüheinrichtung ist in der Fig. 7 dargestellt. Der Stutzen 15 umfasst als Hemmittel nach aussen gebogene Lappen 19, die sich in Längsrichtung über einen Teilbereich des Stutzens 15 erstrecken. Damit keine Verkantung des Schaftes 14 zum Stutzen 15 erfolgt, sind vorzugsweise mindestens drei Ausbuchtungen 19, die elastisch niederdrückbar sind, gleichmässig um den Umfang des Stutzens 15 verteilt.

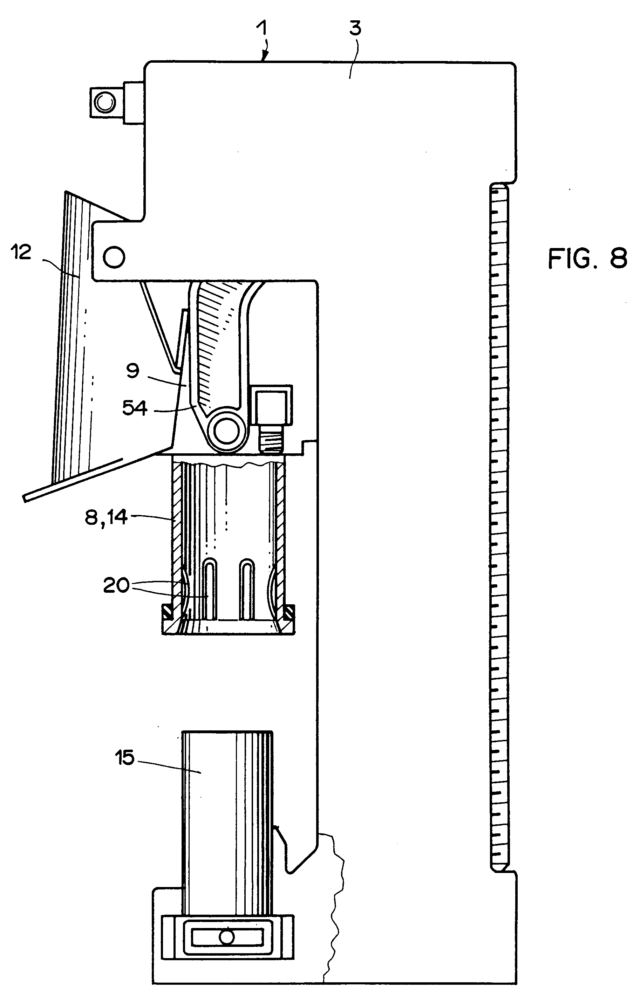

Eine vierte Brüheinrichtung zeigt die Fig. 8. Die niederdrückbaren elastischen Ausbuchtungen 20 sind im Innern des hohlzylinderförmigen Schaftes 14 angeordnet. Sie erstrecken sich ausgehend von im wesentlichen dem unteren Ende des Schaftes 14 über einen Teilbereich längs zur Achse des Schaftes. Eine besondere, von der äusseren zylindrischen Form abweichende Formgebung des Stutzens 15 ist in diesem Fall nicht erforderlich.

## Patentansprüche

1. Brüheinrichtung für eine Kaffeemaschine, mit einem Brühzylinder (9), der eine zylindrische Bohrung (10) aufweist, mit zwei Kolben (7, 8), durch welche die zylindrische Bohrung (10) zum Bilden einer Brühkammer (11) abschliessbar ist, wobei der Brühzylinder (9) und die Kolben (7, 8) relativ zueinander in der Brühzylinderachse verschiebbar sind und der Brühzylinder (9) vertikal angeordnet ist, und wobei in einer Einfüllstellung der obere Kolben (7) mindestens soweit vom oberen Ende des Brühzylinders entfernt ist, dass mittels einem wegschwenkbaren Trichter (12) Kaffeepulver in die Bohrung einfüllbar ist, dadurch gekennzeichnet, dass der eine, obere Kolben (7) unverschiebbar an einem Gestell (1), das zum Tragen der Brüheinrichtung bestimmt ist, angeordnet ist, dass der andere, untere Kolben (8) längs der Bohrung (10) des Brühzylinders (9) frei verschiebbar angeordnet ist und durch einen am unteren Ende des Brühzylinders vorhandenen, als Mitnehmer dienenden Anschlag (13) am Verlassen der Bohrung (10) gehindert ist, dass der untere Kolben (8) einen dem Brühzylinder (9) abgewandten hohlzylinderförmigen Schaft (14) aufweist, der bei der Abwärtsbewegung des Brühzylinders über einen zylinderförmigen Stutzen (15), der dem oberen Kolben gegenüberliegend mit dem Gestell (1) verbunden ist, führbar ist, dass am Schaft (14) und/oder am Stutzen (15) Hemmittel (16, 17, 18, 19, 20) vorhanden sind, die zum vorübergehenden Hemmen der relativen Bewegung des unteren Kolbens (8) gegenüber dem Brühzylinder bestimmt sind, und dass eine Abstreifvorrichtung (21) vorhanden ist, die zum Entfernen des auf dem unteren Kolben aufliegenden Kaffeesatzes bestimmt ist, sobald das obere Ende des Brühzylinders (9) mit der oberen Stirnfläche des unteren Kobens (8) im wesentlichen bündig ist.

2. Einrichtung nach Anspruch 1, dadurch gekennzeichnet, dass eine Antriebsvorrichtung (19) mit einer einzigen Antriebsspindel (6) vorhanden ist.

3. Einrichtung nach Anspruch 2, dadurch gekennzeichnet, dass die Antriebsspindel (6) drehbar am Gestell (1) gelagert ist und sich parallel zum Brühzylinder (9) erstreckt, dass die Antriebsspindel (6) ein sich nahezu über ihre ganze Länge erstreckendes, schraubenlinienförmig verlaufendes Führungsmittel (23) aufweist, dass am Brühzylinder (9) ein Mitnahmeorgan (24) mit einem weiteren Führungsmittel (25) angeordnet ist, wobei die beiden Führungsmittel (23, 25) zusammen wirkverbunden sind, und dass die Führungsmittel so ausgeführt sind, dass bei der Zufuhr von Wasser unter Druck in die Brühkammer (12) der Brühzylinder (9) infolge der Führungsmittelreibung in seiner vorher eingestellten Position verharrt.

4. Einrichtung nach einem der Ansprüche 1 bis 3, dadurch gekennzeichnet, dass die Hemmittel mindestens einen auf dem Stutzen aufgebrachten O-Ring (16) umfassen, wobei die Reibung des O-Ringes (16) innerhalb des Stutzens (15) grösser ist als die Reibung des unteren Kolbens (7) innerhalb der Bohrung (10) des Brühzylinders (9).

5. Einrichtung nach einem der Ansprüche 1 bis 3, dadurch gekennzeichnet, dass die Hemmittel mindestens eine sich in Längsrichtung über einen Teilbereich des Stutzens (15) erstreckende, nach aussen ragende, niederdrückbare elastische Ausbuchtung (19) umfassen.

6. Einrichtung nach einem der Ansprüche 1 bis 3, dadurch gekennzeichnet, dass die Hemmittel mindestens eine sich in Längsrichtung über einen Teilbereich des Schaftes (14) erstreckende, nach innen ragende, niederdrückbare elastische Ausbuchtung (20) umfassen.

7. Einrichtung nach einem der Ansprüche 1 bis 3, dadurch gekennzeichnet, dass die Hemmittel je ein mehrgängiges Gewinde (17, 18) auf dem Stutzen (15) und innerhalb des Schaftes (14) umfassen, welche Gewinde (17, 18) selbstzentrierend sind und eine Steigung derart aufweisen, dass die Bewegung des unteren Kolbens gegenüber dem Brühzylinder über die Länge des Gewindebereiches gehemmt ist.

8. Verfahren zur Herstellung von Kaffee mit einer Brüheinrichtung gemäss dem Patentanspruch 1, dadurch gekennzeichnet, dass in der Einfüllstellung, bei der sich der obere Kolben (7) ausserhalb der Bohrung (10) des Brühzylinders (9) befindet, Kaffeepulver derart in die Bohrung eingefüllt wird, dass dieses nahezu gleichmässig über die dem Innern der Bohrung zugewandte Stirnfläche des unteren Kolbens (8) verteilt wird, dass der Brühzylinder (9) unter gleichzeitigem Mitschleppen des unteren Kolbens (8) zeitgesteuert hochbewegt wird und sich dabei über den oberen Kolben (7) hinwegbewegt, wobei das Volumen der gebildeten Brühkammer (11) ständig verkleinert wird, soweit, bis es dem Volumen des eingefüllten Kaffeepulvers (26) entspricht, dass nach Ablauf der Zeitsteuerung der Brühzylinder (9) um einen vorbestimmten Betrag nach unten bewegt wird um das Brühkammervolumen zu vergrössern, dass durch die Zufuhr vom heissen Wasser in die Brühkammer (11) das Kaffeepulver lose gebrüht und der dabei gebildete Kaffee abgeführt wird, dass der Brühzylinder (9) zum Auspressen des ausgebrühten Kaffeepulvers erneut hochbewegt wird, dass der Brühzylinder (9) nach unten bewegt wird, wobei der untere Kolben durch die Hemmittel (16, 17, 18, 19, 20) derart gehemmt wird, dass seine abwärts gerichtete Bewegung vorübergehend langsamer erfolgt als die des Brühzylinders (9) und wobei das zu einem Kuchen (27) gepresste Kaffeepulver über den oberen Rand des letzteren hinausgestossen und abgestreift wird, und dass der Brühzylinder (9) anschliessend in die Einfüllstellung hochbewegt wird, wobei die aufwärts gerichtete Bewegung des unteren Kolbens (8), durch die Hemmittel (16, 17, 18, 19, 20) gehemmt, vorübergehend langsamer efolgt als diejenige vom Brühzylinder (9).

9. Verfahren nach Anspruch 8, dadurch gekennzeichnet, dass die Zeitsteuerung so eingestellt wird, dass mit der Aufwärtsbewegung des Brühzylinders (9) auch das Volumen der kleinsten einfüllbaren Kaffeepulvermenge bestimmt werden kann.

10. Verfahren nach Anspruch 8 oder 9, dadurch gekennzeichnet, dass die Aufwärtsbewegung des Brühzylinders (9) vor Ablauf der Zeitsteuerung dann gestoppt wird, wenn der nach aufwärts gerichteten Antriebskraft eine gleich grosse, nach abwärts gerichtete Kraft entgegenwirkt.

## Claims

1. Brewing device for a coffee machine, with a brewing cylinder (9) having a cylindrical bore (10), with two pistons (7, 8), by means of which the cylindrical bore (10) can be closed off to form a brewing chamber (11), the brewing cylinder (9) and the pistons (7, 8) being displaceable relative to each other in the brewing cylinder axis, and the brewing cylinder (9) being vertically disposed, in the filling position the upper piston (7) being at least sufficiently far from the upper end of the brewing cylinder that coffee powder can be introduced into the bore by means of a pivotable hopper (12), characterized in that the one, upper piston (7) is disposed undisplaceably on a frame (1) intended to support the brewing device, in that the other, lower piston (8) is disposed freely displaceably along the bore (10) of the brewing cylinder (9) and is prevented from leaving the bore (10) by a stop (13) located at the lower end of the brewing cylinder and serving as an entraining means, in that the lower cylinder (8) has a hollow cylinder-shaped shaft (14) facing away from the brewing cylinder (9), which, when the brewing cylinder moves downwards, can be guided over a cylinder-shaped connecting piece (15) which is connected to the frame (1) situated opposite the upper piston, in that on the shaft (14) and/or on the connecting piece (15) there are blocking means (16, 17, 18, 19, 20) for temporarily blocking the relative movement of the lower piston (8) with respect to the brewing cylinder, and in that there is a stripping device (21) for removing the coffee remaining on the lower piston as soon as the upper end of the brewing cylinder (9) is essentially flush with the upper end face of the lower piston (8).

2. Device according to claim 1, characterized in that there is a drive device (19) with a single drive spindle (6).

3. Device according to claim 2, characterized in that the drive spindle (6) is mounted rotatably on the frame (1) and extends parallel to the brewing cylinder (9), in that the drive spindle (6) has a guide means (23) extending helically over practically its entire length, in that a drive element (24) with an additional guide means (25) is disposed on the brewing cylinder (9), the two guide means (23, 25) being operatively connected together, and in that the guide means are designed so that when water is supplied under pressure to the brewing chamber (12), the brewing cylinder (9) remains in its previously set position due to the friction of the guide means.

4. Device according to one of the claims 1 to 3, characterized in that the blocking means comprise at least one O-ring (16) affixed to the connecting piece, the friction of the O-ring (16) inside the connecting piece (15) being greater than the friction of the lower piston (7) inside the bore (10) of the brewing cylinder (9).

5. Device according to one of the claims 1 to 3, characterized in that the blocking means comprise at least one outwardly projecting, compressible, flexible protrusion (19) extending longitudinally over a portion of the connecting piece (15).

6. Device according to one of the claims 1 to 3, characterized in that the blocking means comprise at least one inwardly projecting, compressible, flexible protrusion (20) extending in the longitudinal direction over a portion of the shaft (14).

7. Device according to one of the claims 1 to 3, characterized in that the blocking means each comprise a multiple thread (17, 18) on the connecting piece (15) and inside the shaft (14), said threads (17, 18) being self-centering and having a pitch such that the movement of the lower piston is blocked over the length of the thread with respect to the brewing cylinder.

8. Method for producing coffee with a brewing device according to claim 1, characterized in that in the filling position, in which the upper piston (7) is located outside the bore (10) of the brewing cylinder (9), coffee powder is inserted into the bore in such a way that it is distributed practically uniformly over the end face of the lower piston (8) turned toward the inside of the bore, in that the brewing cylinder (9) is displaced upwards under time control, taking with it the lower piston (8) at the same time, and is thus displaced beyond the upper piston (7), the volume of the brewing chamber (11) formed being continuously reduced until it corresponds to the volume of the coffee powder inserted (26), in that at the end of the time control the brewing cylinder (9) is displaced downwards by a predetermined amount to enlarge the brewing chamber volume, in that by supplying hot water to the brewing chamber (11) the coffee powder is loose-brewed and the coffee produced in this manner is drawn off, in that the brewing cylinder (9) is once again displaced upwards to press out the exhausted coffee powder, in that the brewing cylinder (9) is displaced downwards, the lower piston being blocked by the blocking means (16, 17, 18, 19, 20) in such a way that its upward movement is temporarily slower than that of the brewing cylinder (9), and the coffee powder pressed to a cake (27) being ejected over the edge of the latter and stripped off, and in that the brewing cylinder (9) is subsequently moved upwards into the filling position, the upward movement of the lower piston (8), blocked by the blocking means (16, 17, 18, 19, 20), being temporarily slower than that of the brewing cylinder (9).

9. Method according to claim 8, characterized in that the time control is set in such a way that, as the brewing cylinder (9) moves upwards, the volume of the smallest amount of insertable coffee powder can be determined.

10. Method according to claims 8 or 9, characterized in that the upward movement of the brewing cylinder (9) is stopped before the end of the time control if an equally great downwardly directed force counteracts the upwardly directed drive force.

## Revendications

1. Dispositif d'infusion pour une machine à café, avec un cylindre d'infusion (9) présentant une ouverture cylindrique (10), et avec deux pistons (7, 8) permettant de fermer l'ouverture cylindrique (10) de sorte à former une chambre d'infusion (11), le cylindre d'infusion (9) et les pistons (7, 8) étant mobiles les uns par rapport aux autres selon l'axe du cylindre d'infusion, le cylindre d'infusion étant vertical, le piston supérieur (7) en position de remplissage étant au moins suffisamment éloigné du bord supérieur du cylindre d'infusion pour que l'ouverture puisse être remplie de poudre de café au moyen d'un entonnoir (12) escamotable par pivotement.
caractérisé en ce que le piston supérieur (7) est relié de manière fixe à un bâti (1) de support du dispositif d'infusion, en ce que l'autre piston, inférieur (8), est placé de manière mobile librement le long de l'ouverture (10) du cylindre d'infusion (9), et est retenu par une butée (13) à l'extrémité inférieure du cylindre d'infusion, servant de tenon d'entraînement et placée à la sortie de l'ouverture (10), en ce que le piston inférieur (8) présente une tige cylindrique creuse (14) opposée au cylindre d'infusion (9), qui est guidable lors du mouvement descendant du cylindre d'infusion par un support en forme de cylindre (15) lié au piston supérieur en face par le bâti (1), en ce que des moyens de freinage (16, 17, 18, 19, 20) sont disponibles sur la tige (14) et/ou sur le support (15), qui servent au ralentissement temporaire du mouvement relatif du piston inférieur (8) par rapport au cylindre d'infusion, et en ce qu'un dispositif de débourrage (21) est disponible, qui sert à l'élimination du marc de café qui se trouve sur le piston inférieur, dès que le bord supérieur du cylindre d'infusion (9) est approximativement à fleur avec la surface frontale supérieure du piston inférieur (8).

2. Dispositif selon la revendication 1, caractérisé en ce qu'il est muni d'un dispositif d'entraînement (19) avec une seule vis d'entraînement (6).

3. Dispositif selon la revendication 2, caractérisé en ce que la vis d'entraînement (6) est fixée de manière rotative au bâti (1) et s'étend parallèlement au cylindre d'infusion (9), en ce que la vis d'entraînement (6) présente un moyen de guidage (23) s'étendant pratiquement sur toute sa longueur et en forme de tracé de filetage, en ce qu'un organe d'entraînement (24) avec un autre moyen de guidage (25) est placé contre le cylindre d'infusion (9), les deux moyens de guidage (23, 25) étant liés ensemble de manière à coopérer, et en ce que les moyens de guidage sont réalisés en sorte que lors de l'introduction d'eau sous pression dans la chambre d'infusion (12), le cylindre d'infusion (9) est maintenu dans sa position réglée précédemment en raison du frottement des moyens de guidage.

4. Dispositif selon l'une des revendications 1 à 3, caractérisé en ce que les moyens de freinage comprennent au moins un joint O-Ring (16) placé sur le support, le frottement du joint O-Ring (16) à l'intérieur du support (15) étant plus grand que le frottement du piston inférieur (7) à l'intérieur de l'ouverture (10) du cylindre d'infusion (9).

5. Dispositif selon l'une des revendications 1 à 3, caractérisé en ce que les moyens de freinage comprennent au moins un corps courbé (19) élastique et compressible, dépassant vers l'extérieur, et s'étendant dans la direction longitudinale sur une partie du support (15).

6. Dispositif selon l'une des revendications 1 à 3, caractérisé en ce que les moyens de freinage comprennent au moins un corps courbé (20) élastique et compressible, dépassant vers l'intérieur, et s'étendant dans la direction longitudinale sur une partie de la tige (14).

7. Dispositif selon l'une des revendications 1 à 3, caractérisé en ce que les moyens de freinage comprennent un filetage multiple (17, 18) à la fois sur le support (15) et à l'intérieur de la tige (14), lesdits filetages (17, 18) étant auto-centrant et présentant un pas tel que le mouvement du piston inférieur par rapport au cylindre d'infusion est ralenti sur la longeur du domaine fileté.

8. Méthode de préparation de café avec un dispositif d'infusion selon la revendication 1, caractérisé en ce que dans la position de remplissage, au cours de laquelle le piston supérieur (7) se trouve en dehors de l'ouverture (10) du cylindre d'infusion (9), la poudre de café est introduite dans l'ouverture de manière à être approximativement répartie de manière régulière sur la surface frontale du piston inférieur (8) tournée contre l'intérieur de l'ouverture, en ce que le cylindre d'infusion (9) est contrôlé de manière à être déplacé vers le haut avec un mouvement accouplé simultané du piston inférieur (8), et se déplace par là-même au dessus du piston supérieur (7), le volume de la chambre d'infusion formée se réduisant ainsi constamment, jusqu'à ce qu'il corresponde au volume de la poudre de café (26) introduite, en ce que après l'expiration du contrôle temporel le cylindre d'infusion (9) se déplace d'une distance préderterminée vers le bas pour agrandir le volume de la chambre d'infusion, en ce que la poudre de café est infusée par l'introduction d'eau chaude dans la chambre d'infusion (11), le café ainsi formé étant évacué, en ce que le cylindre d'infusion (9) est à nouveau déplacé vers le haut pour comprimer le poudre de café infusée, en ce que le cylindre d'infusion (9) est déplacé vers le bas, le piston inférieur étant alors freiné par les moyens de freinage (16, 17, 18, 19, 20) en sorte que son mouvement en direction du bas est momentanément plus lent que celui du cylindre d'infusion (9), la poudre de café comprimée en un gâteau (27) étant poussée et balayée au-dessus du bord supérieur du cylindre d'infusion, et en ce que le cylindre d'infusion (9) est ensuite déplacé vers le haut en position de remplissage, le mouvement en direction du haut du piston inférieur (8) étant freiné par les moyens de freinage (16, 17, 18, 19, 20) et se déroulant momentanément plus lentement que celui du cylindre d'infusion (9).

9. Méthode selon la revendication 8, caractérisée en ce que le contrôle temporel est réglé de manière à ce que le volume de la plus petite quantité de poudre de café puisse être déterminé avec le mouvement vers le haut du cylindre d'infusion (9).

10. Méthode selon l'une des revendications 8 ou 9, caractérisé en ce que le mouvement vers le haut du cylindre d'infusion (9) est interrompu avec l'achèvement du contrôle temporel lorsqu'une force dirigée contre le bas s'oppose avec la même intensité à la force d'entraînement dirigée vers le haut.
